# EUROPÄISCHE PATENTSCHRIFT

(11) **EP 1 784 578 B1**
(45) Veröffentlichungstag und Bekanntmachung des Hinweises auf die Patenterteilung: **19.03.2008**
(21) Anmeldenummer: 05776281.7
(22) Anmeldetag: 01.09.2005
(51) Int. Cl.: F16B 37/04

(54) **U-F\RMIGES KLEMMST]CK**
U-SHAPED CLAMP
CALE EN FORME DE U

(30) Priorität: 02.09.2004 DE 102004042564; 07.12.2004 DE 102004058938
(43) Veröffentlichungstag der Anmeldung: 16.05.2007
(73) Patentinhaber: EJOT GmbH & Co. KG, 57334 Bad Laasphe (DE)
(72) Erfinder: RAUSCH, Uwe, 99897 Tambach-Dietharz (DE); GÖRING, Marko, 99867 Gotha (DE); CHRIST, Eberhard, 99897 Tambach-Dietharz (DE)
(74) Vertreter: Bardehle, Heinz
(86) Internationale Anmeldenummer: PCT/EP2005/009417
(87) Internationale Veröffentlichungsnummer: WO 2006/024527

(56) Entgegenhaltungen:
- US-A- 3 145 753

## Beschreibung

Die Erfindung bezieht sich auf U-förmiges Klemmstück zum Anbringen an einer mit einer Öffnung versehenen Platte mit zwei über einen Bügel verbundenen, flachen Schenkeln mit einem zwischen den beiden Schenkeln axial beweglich angeordneten Mutterteil zur Aufnahme einer die Öffnung und einen Schenkel durchsetzenden Schraube, welches Mutterteil über einen seitlichen Arm an dem Klemmstück verdrehsicher gehalten ist.

Derartige Klemmstücke dienen dazu, an einer Platte mittels einer Schraube irgendein Bauteil zu befestigen, wozu der Platte für die Aufnahme der Schraube ein Mutterteil zur Verfügung gestellt werden muss, da meist die Platte selbst ungeeignet dafür ist, ein Gewinde aufzunehmen, in das eine Schraube eingedreht werden könnte. Durch das Klemmstück wird ein Mutterteil in den Bereich der Öffnung in der Platte gebracht, so dass mittels der Schraube und dem Mutterteil dann das Bauteil an der Platte angeschraubt werden kann.

Hierzu wird auf die europäische Patentschrift 0 353 468 B1 verwiesen, die ein Klemmstück gemäß der eingangs erwähnten Gestaltung offenbart, gemäß der an den einen Schenkel ein Mutterteil einstückig angeformt ist, in das eine die Öffnung in der Platte und den anderen Schenkel durchsetzende Schraube eingedreht ist. Das Klemmstück wird entweder am Rand der Platte auf diese geschoben oder die Platte besitzt eine Montageausnehmung in der Nähe der für die Schraube vorgesehenen Öffnung in der Platte. In diese Montageausnehmung wird das Klemmstück eingesetzt und über einen Rand der Montageausnehmung so auf die Platte geschoben, dass das Mutterteil des Klemmstücks mit der Öffnung in der Platte fluchtet. Ähnliche Gestaltungen mit an den einen Schenkel angeformtem Mutterteil zeigen die US-PS 4,333,211, die französische Patentanmeldung 2 492 015, die europäische Patentanmeldung 0 199 614 A1, die europäische Patentanmeldung 1 336 763 A2 und die deutsche Offenlegungsschrift 26 52 138.

Gemäß der durch diese Druckschriften ersichtlichen Denkrichtung war durch die Gestaltung des U-förmigen Klemmstücks mit dem Abstand zwischen seinen beiden Schenkeln seine Verwendung für Platten bestimmt, die sich hinsichtlich ihrer Stärke weitgehend nach diesem Abstand richten mussten. Eine einfache Anpassung des Klemmstücks an unterschiedliche Plattenstärken ist mit den bekannten Klemmstücken entweder überhaupt nicht oder nur mit einem Erschwernis möglich, wie sich dies beispielsweise aus der EP 1 336 763 A2 ergibt, bei der zwecks Anpassung an verschiedene Stärken der Platte ihr einer Schenkel mit einer zur Platte hin gerichteten Durchbiegung versehen ist, die je nach Dicke der von ihr umfassten Platte mehr oder minder gestreckt wird. Damit ergibt sich eine insbesondere bei dünneren Platten der Nachteil der Anlage des gebogenen Schenkels nur im Bereich einiger Punkte, jedenfalls nicht über eine gestreckte Fläche, womit die Stabilität der Verbindung der das Klemmstück tragenden Platte und einem an der Platte befestigenden Bauteil erheblich eingeschränkt wird.

Es sind weiterhin aus der US-PS 3,145,753 und US-PS 3,118,480 U-förmige Klemmstücke bekannt, bei denen ein axial beweglich angeordnetes Mutterteil vorgesehen ist, das über einen seitlichen Arm an dem Klemmstück verdrehsicher gehalten ist und aufgrund seiner axialen Beweglichkeit Platten mit unterschiedlicher Dicke aufnehmen kann, an die bei Einsetzen und Anziehen der Schraube das Mutterteil herangezogen wird und sich dann satt an die Platte setzt. Die Halterung des Mutterteils erfolgt dabei über eine mit dem Mutterteil verbundene, von diesem zu dem Bügel strebende Lasche, die gemäß der US-PS 3,145,753 gabelförmig lose den Bügel umfasst, beim Ausführungsbeispiel gemäß der US-PS 3,118,480 mit einem Haken den Bügel lose durchsetzt. Eine derartige lose Halterung des Mutterteils birgt die Gefahr in sich, dass die lose gabelartige oder hakenartige Verbindung zwischen der Lasche und dem Bügel verkantet und damit die notwendige Ausrichtung des Mutterteils für das Einstecken und das Eindrehen einer Schraube erschwert.

Der Erfindung liegt daher die Aufgabe zugrunde, das U-förmige Klemmstück gemäß der eingangs geschilderten Gestaltung so zu gestalten, dass dieses das Mutterteil auch bei beträchtlicher axialer Verschiebung infolge der Anbringung an einer besonders dünnen oder besonders dicken Platte stets sicher führt und damit ein Verkanten des das Mutterstück haltenden Schenkels mit Sicherheit verhindert. Erfindungsgemäß geschieht dies dadurch, dass das Mutterteil mit seinem Ende axial federnd an dem der Platte abgewandten Schenkel über mehrere vom Ende des Mutterteils zu dem Schenkel verlaufende Spangen befestigt ist.

Durch diese Verbindung des Mutterteils mit dem betreffenden Schenkel über mindestens zwei federnde Spangen erhält dieses beim Einführen einer dicken Platte bzw. Heranziehen des Mutterteils an eine dünne Platte eine sichere Führung, durch die die Handhabung des U-förmigen Klemmstücks wesentlich erleichtert und verbessert wird.

Eine Abwandlung einer Gestaltung mit zwei federnden Spangen besteht darin, dass das Mutterteil mit seinem der Platte zugewandten Ende über eine flexible Spange an den der Platte abgewandten Schenkel und eine weitere flexible Spange an dem Bügel befestigt ist und sein seitlicher Arm in eine Ausnehmung in den der Platte abgewandten Schenkel verdrehsicher eingreift.

Durch die Gestaltung der einen Spange als Verbindung zwischen Mutterteil und Bügel ergibt sich für die betreffende Seite des Mutterteils eine besonders sichere Führung, ohne dass dabei die notwendige Flexibilität des Mutterteils verloren geht.

Das erfindungsgemäße Klemmstück erlaubt es, Platten mit erheblich unterschiedlicher Dicke aufzunehmen, an die bei Einsetzen und Anziehen der Schraube das Mutterteil herangezogen wird und sich dann satt an die Platte setzt, wobei der der Platte zugewandte flache Schenkel ebenfalls satt an der betreffenden Oberfläche der Platte anliegt, die auf diese Weise von dem flachen einen Schenkel und dem Mutterteil gehalten wird, ohne dass dazwischen noch irgendwelche federnden Teile existieren. Es ergibt sich somit eine besonders stabile Befestigung des Mutterteils an der Platte und damit über die Schraube auch eines weiteren Bauteils an der Platte, so dass die Platte, versehen mit dem erfindungsgemäßen Klemmstück, in der Lage ist, erhebliche, auf das angeschraubte Bauteil wirkende Kräfte aufzunehmen. Dabei wird durch die Gestaltung des Mutterteils mit seinem seitlichen Arm dafür gesorgt, dass die das Mutterteil durchsetzende Schraube auch stramm angezogen werden kann, da der Arm über das Klemmstück dafür sorgt, dass das Mutterteil mittels des Arms verdrehsicher gehalten ist.

Für die Gestaltung der Verdrehsicherung des Mutterteils gibt es verschiedene Möglichkeiten. So kann man den Bügel mit dem Arm als längsbewegliche Gabelführung ausbilden. Es ist auch möglich, den Bügel mit einer Längsrippe zu versehen, die von zwei Vorsprüngen am Ende des Arms umfasst ist. Eine weitere Möglichkeit besteht darin, den Bügel mit einem Längsschlitz zu versehen, in dem ein Vorsprung des Arms eingreift. Dieser Längsschlitz kann durch zwei parallele Längsrippen am Bügel gebildet werden.

Um eine seitliche Verschiebung des Mutterteils in Richtung des Arms zu begrenzen, gestaltet man den Vorsprung zweckmäßig so, dass dieser mit einer Verbreiterung den Bügel hintergreift. Hierdurch wird verhindert, dass sich das Mutterteil in Richtung vom Bügel weg verschieben kann. Es ist darüber hinaus auch möglich, den Arm so zu gestalten, dass dieser über eine Schulter in den Vorsprung übergeht, der in Bezug auf eine Längsverschiebung des Arms einen Anschlag gegen den Bügel bildet. Hierdurch wird erreicht, dass das Mutterteil sich nicht in Richtung auf den Bügel verschieben kann.

Die sich von dem einen Schenkel erstreckenden Spangen gestaltet man zweckmäßig so, dass diese bogenförmig verlaufen. Es ist aber auch möglich, die Spangen schraubenfederartig zu gestalten.

Um das Einführen einer Platte in das Klemmstück zu erleichtern, gibt man dem Mutterteil zweckmäßig auf seiner der Platte zugewandten Seite einen Lappen, der als Einführschräge dient.

Um dem Klemmstück in Bezug auf die Platte und damit auf die Öffnung in der Platte eine gewisse Lagesicherheit zu geben, kann man den der Platte zugewandten Schenkel mit einer zum Einbringen in die Öffnung gestalteten Düse versehen. Darüber hinaus ist es auch möglich, das Mutterteil an seiner der Platte zugewandten Seite mit einem in die Öffnung hineinragenden Ring zu versehen. Um das Einführen der Platte in das Klemmstück durch die Düse bzw. den Ring nicht irgendwie zu behindern, versieht man die Düse und den Ring jeweils mit einer das Einführen der Platte erleichternden Abschrägung. Wenn dann die Platte auf diese Abschrägung trifft, so lenkt die Abschrägung die Düse bzw. den Ring in die Öffnung der Platte.

Die Ausnehmung zur Herstellung der Verdrehsicherung zwischen dem Mutterteil und den Schenkeln gestaltet man zweckmäßig als Schlitz in dem der Platte abgewandten Schenkel.

Um für das Klemmstück eine Vormontierbarkeit zu gewährleisten, gestaltet man dieses zweckmäßig so, dass der der Platte zugewandte Schenkel und das Mutterteil derart ausgerichtet sind, dass das Mutterteil und der Schenkel bei aufgenommener Platte diese einklemmen. Diese Ausrichtung gestattet es, das Klemmstück zunächst über den Rand der Platte zu schieben, an der sich das Klemmstück dann aufgrund der ihm innewohnenden Spannung zunächst festklemmt, bis die endgültige Befestigung durch das Einsetzen und Anziehen einer Schraube in das Mutterteil erfolgt.

Um beim Einschieben einer Platte in das Klemmstück diese Bewegung zu begrenzen, kann man zweckmäßig an den Bügel ein Anschlagstück anformen, an das eine in das Klemmstück eingeschobene Platte zwecks Begrenzung der Einschubtiefe anschlägt.

Das Klemmstück ist so gestaltet, dass es sich sehr gut dazu eignet, einstückig aus Kunststoff ausgebildet zu werden, beispielsweise durch Spritzen.

Das Klemmstück ist so gestaltet, dass es sich sehr gut dazu eignet, einstückig aus Kunststoff ausgebildet zu werden, beispielsweise durch Spritzen.

In den Figuren sind Ausführungsbeispiele der Erfindung dargestellt. Es zeigen:
- Figur 1: das Klemmstück mit Befestigung des Mutterteils über bogenförmig verlaufende Spangen in perspektivischer Sicht;
- Figur 2: das gleiche Klemmstück in Seitensicht;
- Figur 3: das gleiche Klemmstück in Draufsicht;
- Figur 4: das gleiche Klemmstück im Schnitt gemäß Schnittlinie IV-IV aus Figur 3;
- Figur 5: einen Schnitt gemäß Schnittlinie V-V aus Figur 2;
- Figur 6: einen Schnitt gemäß Schnittlinie V-V aus Figur 2 mit einem Vorsprung am Arm zur Begrenzung der Längsverschiebung des Arms;
- Figur 7: das gleiche Klemmstück im Schnitt, angebracht an einer Platte;
- Figur 8: das gleiche Klemmstück mit an der Platte angeschraubtem Bauteil;
- Figur 9: das Klemmstück im Schnitt gemäß Schnittlinie IV-IV aus Figur 3 mit abgeschrägter Düse und Ring;
- Figur 10: ein Klemmstück mit schraubenfederartig verlaufenden Spangen zur Befestigung des Mutterteils;
- Figur 11: eine Seitensicht des Klemmstücks gemäß Figur 10;
- Figur 12: einen Schnitt gemäß Schnittlinie XII-XII aus Figur 11;
- Figur 13: eine Weiterbildung des Klemmstücks in perspektivischer Sicht;
- Figur 14: eine Seitensicht dieses Klemmstücks;
- Figur 15: eine Ansicht des Klemmstücks gemäß-Figur 14 von unten;
- Figur 16: einen Schnitt durch das Klemmstück gemäß der Schnittlinie XVI-XVI aus Figur 15;
- Figur 17: einen Schnitt durch das Klemmstück gemäß der Schnittlinie XVII-XVII aus Figur 16;
- Figur 18: einen Schnitt entsprechend der Darstellung in Figur 16 mit einer das Klemmstück aufnehmenden relativ dünnen Platte;
- Figur 19: das gleiche Klemmstück mit einer relativ dicken Platte;
- Figur 20: die Darstellung gemäß Figur 19 mit eingesetzter Schraube;
- Figur 21: das Klemmstück im Schnitt entsprechend Figur 16 mit einem an das Mutterstück herangebogenen Schenkel.
- Figur 22: das Klemmstück, versehen mit einem Anschlagstück;
- Figur 23: das gleiche Klemmstück mit einem gegenüber der Gestaltung nach Figur 22 verlängerten Anschlagstück.

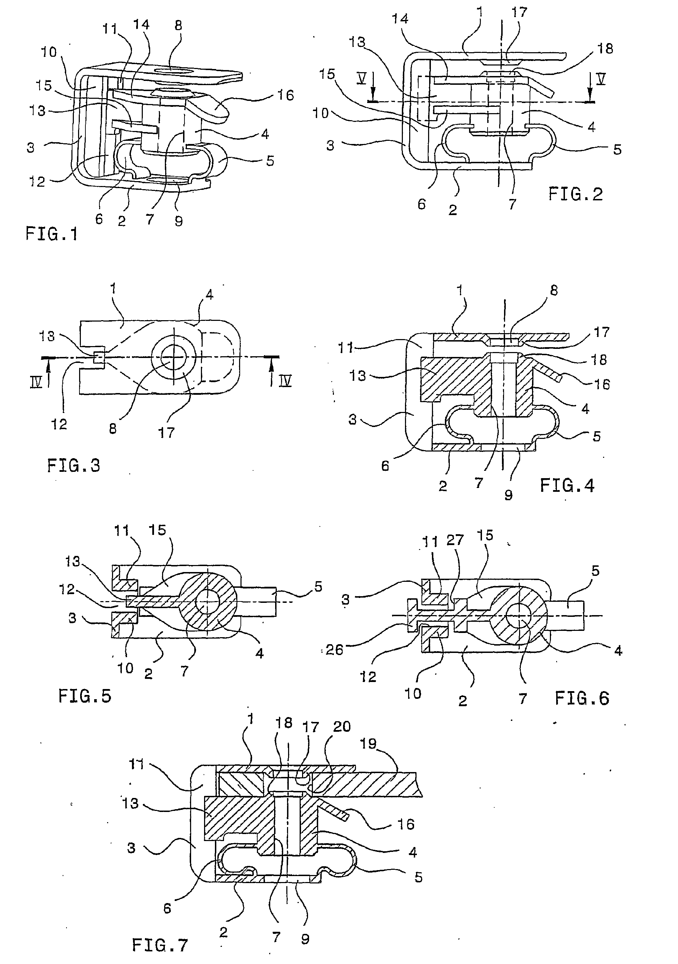

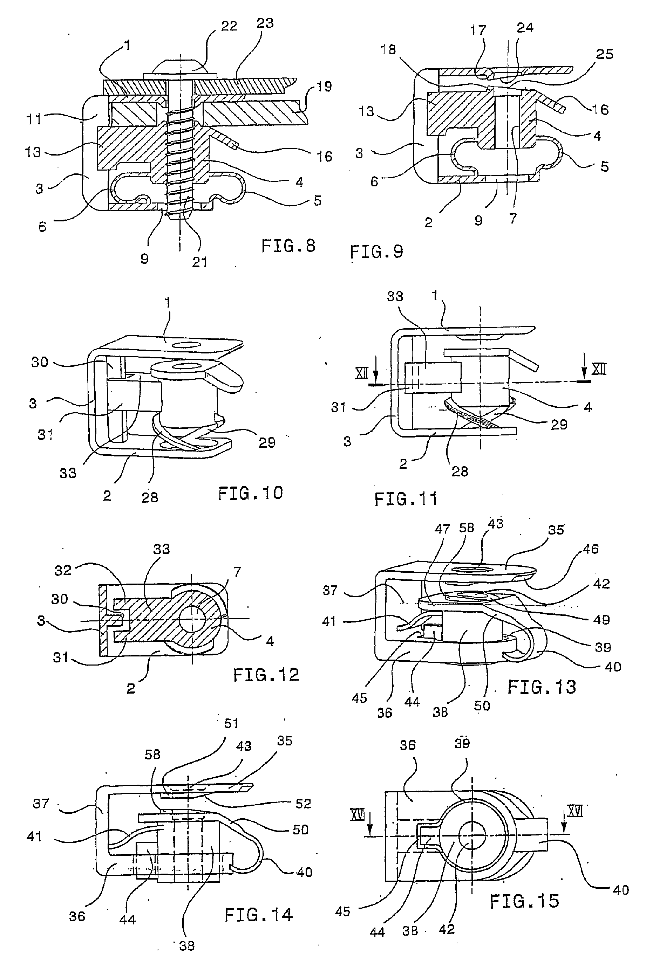

Das in der Figur 1 in perspektivischer Sicht dargestellte Klemmstück enthält den oberen Schenkel 1, den unteren Schenkel 2 und den die beiden Schenkel 1 und 2 verbindenden Bügel 3. Das Klemmstück besteht aus einem Material, das ein Auf biegen der Schenkel 1 und 2 gegenüber dem Bügel 3 und ein Zurückfedern der beiden Schenkel 1 und 2 erlaubt, wenn in das Klemmstück eine Platte eingeschoben wird, wie dies im Zusammenhang mit den Figuren 7 und 8 erläutert ist.

Zwischen den beiden Schenkeln 1 und 2 ist das Mutterteil 4 angeordnet, das über die rundgebogen verlaufenden Spangen 5 und 6 mit dem Schenkel 2 einstückig verbunden ist. Die ebenfalls aus federndem Material bestehenden Spangen 5 und 6 geben dem Mutterteil 4 eine in Axialrichtung zum Mutterteil 4 verlaufende Beweglichkeit. Das Mutterteil 4 enthält die Bohrung 7, in die eine Schraube eingeschraubt werden kann, wie dies im Zusammenhang mit der Figur 8 dargestellt ist. Um eine Schraube in das Mutterteil 4 einführen zu können, ist der Schenkel 1 mit dem Durchbruch 8 versehen. Einen entsprechenden Durchbruch 9 weist auch der Schenkel 2 auf, so dass das gesamte Klemmstück von einer Schraube durchsetzt werden kann (siehe Figur 8). Da beim Eindrehen einer Schraube in die Bohrung 7 des Mutterteils 4 ein Drehmoment auf das Mutterteil 4 ausgeübt wird, ist für die Verhinderung eines Mitdrehens des Mutterteils 4 eine Verdrehsicherung vorgesehen, die folgendermaßen ausgebildet ist: Der Bügel 3 ist mit zwei Längsrippen 10 und 11 versehen, die zwischen sich einen Längsschlitz 12 stehen lassen, in den ein Vorsprung 13 eingreift, der von den vom Mutterteil 4 vorspringenden Armen 14 und 15 getragen wird. Es besteht somit eine drehfeste Verbindung zwischen dem Mutterteil 4 und dem Vorsprung 13, der in den Längsschlitz 12 eingreift und aufgrund seiner Anlage an den Längsrippen 10 und 11 daran gehindert ist, bei einem auf das Mutterteil 4 wirkenden Drehmoment mitgedreht zu werden. Es handelt sich also bei dieser Verdrehsicherung um eine längsbewegliche Gabelführung.

An dem Mutterteil 4 ist weiterhin der Lappen 16 angebracht, der eine Einführschräge für eine zwischen Schenkel 1 und Mutterstück 4 einzuschiebende Platte bildet (siehe Figur 7).

Beim Einsetzen einer Platte zwischen den Schenkel 1 und das Mutterteil 4 wird dieses in Richtung auf den Schenkel 2 weggedrückt, wobei sich die Spangen 5 und 6 entsprechend zusammendrücken und damit für das Einschieben einer Platte genügend Spielraum geben, worauf im Zusammenhang mit den Figuren 7 und 8 näher eingegangen wird.

In der Figur 2 ist das Klemmstück gemäß Figur 1 in Seitensicht dargestellt. Aus Figur 2 ist ersichtlich, dass der Vorsprung 13 (gestrichelt gezeichnet) in dem Längsschlitz hinter der Längsrippe 10 auf- und abwärts gleiten kann, um zwischen dem Schenkel 1 und dem Mutterteil 4 genügend Platz für einzuschiebende, unterschiedlich dicke Platten zur Verfügung zu stellen.

In der Figur 2 sind noch die Düse 17 und der Ring 18 eingezeichnet, die dafür vorgesehen sind, in eine entsprechende Öffnung in einer einzuschiebenden Platte einzudringen und damit dem Klemmstück gegenüber einer Platte einen gewissen festen Sitz zu geben (siehe Figur 7 und 8).

Figur 3 zeigt das Klemmstück in Draufsicht, wobei nur der Schenkel 1, der Vorsprung 13, der Längsschlitz 12, der Durchbruch 8 und die Düse 17 direkt zu sehen sind. Die Lage des Mutterteils 4 ist durch die gestrichelte Linie angedeutet.

In der Figur 4 ist das Klemmstück gemäß den Figuren 1 und 2 im Schnitt gemäß der Schnittlinie IV-IV aus Figur 3 dargestellt, aus der hervorgeht, dass in das Klemmstück eine Schraube durch die Durchbrüche 8 und 9 und die Bohrung 7 im Mutterteil 4 eingesteckt werden kann.

In der Figur 5 ist das Klemmstück gemäß den Figuren 1 und 2 längs der Schnittlinie V-V dargestellt, aus der deutlich hervor geht, wie der Vorsprung 13 im Längsschlitz 12 zwischen den beiden Längsrippen 10 und 11 als Verdrehsicherung gehalten wird.

In der Figur 6 ist eine Variante der Gestaltung des Klemmstücks gemäß Figur 5 dargestellt, bei der der Vorsprung 13 in die Verbreiterung 26 übergeht. Außerdem besitzt der Arm 15 die Schulter 27, die einen Anschlag gegen die Längsrippen 10 und 11 bildet.

Figur 7 zeigt einen Schnitt durch das Klemmstück, der der Darstellung in Figur 4 entspricht, allerdings mit einer zwischen dem Schenkel 1 und dem Mutterteil 4 eingeschobenen Platte 19. Die Platte 19 ist mit der Öffnung 20 versehen, durch die eine Schraube eingesteckt werden kann. Dabei sorgt die Düse 17 und der am Mutterteil ansetzende Ring 16 dafür, dass die Platte 19 mit ihrer Öffnung 20 nach dem Einschieben der Platte 19 zunächst festgehalten werden kann, ohne dass es einer weitergehenden Befestigung durch eine Schraube bedarf.

Figur 7 zeigt gegenüber der Figur 4 deutlich, dass durch das Einschieben der Platte 19 das Mutterteil 4 gegen den Schenkel 2 gedrückt ist, so dass sich die beiden Spangen 5 und 6 stärker zusammengedrückt haben, als dies in der Darstellung gemäß Figur 4 ohne eingeschobene Platte der Fall ist. Hieraus ist auch ersichtlich, dass das Mutterteil 4 entsprechend der Flexibilität der Spangen 5 und 6 und deren Spielraum bis zum Schenkel 2 hinsichtlich der Dicke einer einzuschiebenden Platte 19 eine große Variationsbreite bietet, womit also das erfindungsgemäße U-förmige Klemmstück besonders gut geeignet ist, an Platten mit einem erheblichen Dickenspielraum angebracht zu werden. Insbesondere kommt hierfür ein Spielraum von mehreren Millimetern in Frage.

In der Figur 8 ist das Klemmstück gemäß Figur 7 mit eingeschobener Platte 19 und eingedrehter Schraube 21 dargestellt, die hier als selbstfurchende Schraube ausgebildet ist und sich ihr Gewinde in dem Mutterteil 4 selbst gefurcht hat. Es sei jedoch darauf hingewiesen, dass natürlich Mutterteile verwendet werden können, die bereits mit einem vorgeformten Gewinde versehen sind. Die Schraube 21 wird von dem Mutterteil 4 aufgenommen und drückt mit ihrem Schraubenkopf 22 ein Bauelement 23 gegen den Schenkel 1 und damit indirekt gegen die Platte 19, womit also an der Platte 19 das Bauteil 23 mittels der Schraube 21 und dem Mutterteil 4 sicher befestigt ist.

In der Figur 9 ist eine Abwandlung des Klemmstücks gemäß Darstellung in Figur 4 wiedergegeben. Es handelt sich dabei um eine abgeschrägte Düse 24 und einen abgeschrägten Ring 25. Aufgrund dieser Abschrägungen ergibt sich für das Einführen einer Platte 19 (siehe Figur 7) ein erleichterter Einlauf, so dass sich insbesondere eine besonders dicke Platte gegenüber der Federkraft der über den Bügel 3 zusammengehaltenen Schenkel 1 und 2 leicht einschieben lässt.

In der Figur 10 ist eine Variante des U-förmigen Klemmstücks gegenüber der Darstellung in den Figuren 1 und 2 perspektivisch wiedergegeben, bei der es sich um die Verbindung des Mutterteils 4 mit dem Schenkel 2 handelt. Diese Verbindung besteht hier aus schraubenfederartig verlaufenden Spangen 28 und 29, die besonders günstige Federungseigenschaften für die Axialbeweglichkeit des Mutterteils 4 bieten. Darüber hinaus ist die längsbewegliche Gabelführung zur Verdrehsicherung des Mutterteils 4 anders gestaltet als in den vorstehend erwähnten Figuren. Diese Gabelsicherung besteht hier aus der einzigen Längsrippe 30, die von zwei Vorsprüngen 31 und 32 des Arms 33 umfasst wird (siehe Figur 12).

In der Figur 11 ist die perspektivische Gestaltung gemäß Figur 10 in einer Seitensicht wiedergegeben.

Figur 12 zeigt das in den Figuren 10 und 11 dargestellte Klemmstück im Schnitt längs der Schnittlinie XII-XII aus Figur 11. Aus der Figur 12 geht deutlich die hier verwendete Gabelführung hervor, die aus der einzigen Längsrippe 30 und den beiden Vorsprüngen 31 und 32 besteht.

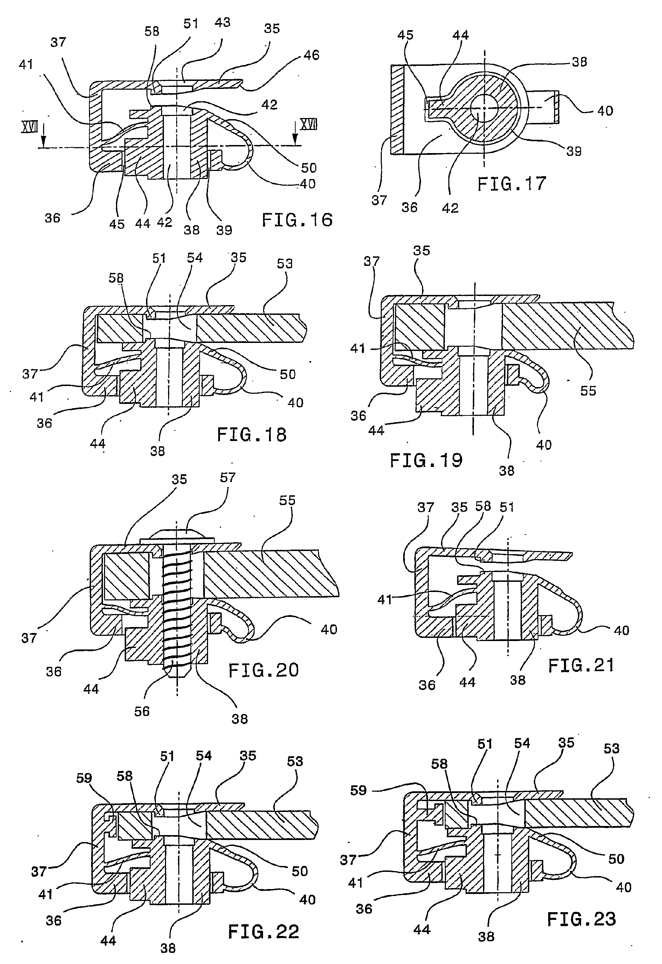

Das in der Figur 13 in perspektivischer Sicht dargestellte Klemmstück stellt eine Abwandlung der Gestaltung gemäß der Figuren 1 bis 4 dar. Das Klemmstück gemäß Figur 13 enthält den oberen Schenkel 35, den unteren Schenkel 36 und den die beiden Schenkel 35 und 36 verbindenden Bügel 37. Bezüglich des Materials des Klemmstücks wird auf die Erläuterungen zu Figur 1 verwiesen. Zwischen den beiden Schenkeln 35 und 36 ist das Mutterteil 38 angeordnet, das hier eine Ausnehmung 39 in den unteren Schenkel 36 durchsetzt. Das Mutterteil 38 ist über die Spange 40 und die Spange 41 mit dem unteren Schenkel 36 bzw. dem Bügel 37 verbunden, die aus federndem Material bestehenden Spangen 40 und 41 geben dem Mutterteil 38 (wie auch beim Ausführungsbeispiel gemäß den Figuren 1 bis 4) die erforderliche axiale Beweglichkeit. Die Spange 40 setzt hier im Gegensatz zu dem Ausführungsbeispiel gemäß den Figuren 1 bis 4 an dem dem oberen Schenkel 35 zugewandten Ende des Mutterteils an, was hier die Beweglichkeit des Mutterteils 38 gegenüber den beiden Schenkeln 35 und 36 erhöht. Das Mutterteil 38 enthält die Bohrung 42, in die eine Schraube eingedreht werden kann (siehe Figur 20). Um eine Schraube in das Mutterteil 38 einführen zu können, ist der obere Schenkel 35 mit dem Durchbruch 43 versehen. Eine in das Klemmstück eingesetzte Schraube kann damit von dem Durchbruch 43 her über die gesamte Länge des Mutterteils 38 dieses durchsetzen. Um ein beim Eindrehen einer Schraube auf das Mutterteil 38 wirkendes Drehmoment aufzufangen, ist als Verdrehsicherung der seitliche Arm 44 vorgesehen, der in die Ausnehmung 45 in dem unteren Schenkel 36 eingreift. Diese Gestaltung verhindert, dass bei einem auf das Mutterteil 38 wirkenden Drehmoment dieses mitgedreht werden kann.

Um das Einschieben einer Platte (siehe Figuren 18 und 19) in den Zwischenraum zwischen dem oberen Schenkel 35 und dem Mutterteil 38 zu erleichtern, weist der obere Schenkel 35 eine Abschrägung 46 auf. Das Mutterteil 38 weist an seiner dem oberen Schenkel 35 zugewandten Seite den Flansch 47 auf. Der Flansch 47 besitzt auf seiner der Abschrägung 46 zugewandten Seite den Durchzug 58 mit der Abschrägung 49, wobei die beiden einer einzuschiebenden Platte zugewandten Teile, nämlich der obere Schenkel 35 und das Mutterteil 38, durch eine entsprechende Gestaltung durch die Abschrägungen 46 und 49 dieses Einschieben erleichtern. Weiterhin wird das Einführen einer Platte durch die Verdickung 50 an dem dem Mutterteil 38 zugewandten Ende der Spange 40 erleichtert, die hier als Einführschräge wirkt.

Das in der Figur 13 dargestellte Klemmstück ist in Seitensicht in der Figur 14 wiedergegeben, die deutlich die bewegliche Halterung des Mutterteils 38 über die beiden Spangen 40 und 41 zeigt. Aus Figur 14 geht noch hervor, dass der Durchbruch 43 im oberen Schenkel 35 auf der dem Mutterteil 38 zugewandten Seite einen Durchzug 51 bildet, an dem in Richtung auf eine einzuführende Platte die Einführschräge 52 angebracht ist.

In der Figur 15 ist das Klemmstück gemäß Figur 14 von unten gesehen dargestellt. Aus Figur 15 geht deutlich hervor, dass die Verdrehsicherung durch den seitlichen Arm 44 am Mutterteil 38 und die Ausnehmung 45 in dem unteren Schenkel 36 gebildet wird. Der seitliche Arm 44 lässt sich aufgrund seines geringen Abstandes zu den Wänden der Ausnehmung 45 nur geringfügig verdrehen, so dass beim Eindrehen einer Schraube dem Mutterteil 38 nur eine sehr geringe Mitnahme ermöglicht ist.

Figur 16 zeigt einen Schnitt durch das Klemmstück gemäß der Linie XVI-XVI aus Figur 15, die die axial bewegliche Aufhängung des Mutterteils 38 deutlich zeigt.

Figur 17 zeigt das Klemmstück im Schnitt längs der Linie XVII-XVII aus Figur 16. Aus dieser Figur geht deutlich hervor, dass sich das Mutterteil 38 mit ausreichendem Spielraum gegenüber dem unteren Schenkel in dessen Ausnehmung 39 axial bewegen kann.

Figur 18 zeigt das in den Figuren 13 bis 17 dargestellte Klemmstück mit einer eingeschobenen Platte 53, die zur Aufnahme eines Bolzens mit der Öffnung bzw. dem Loch 54 versehen ist. In dieses Loch 54 ragt von dem oberen Schenkel 35 her der Durchzug 51 einerseits und von der anderen Seite der Durchzug 58 hinein, wodurch sich eine Sicherung dafür ergibt, dass die Platte 53 nach ihrem Einsetzen in das Klemmstück nicht wieder abgezogen werden kann.

Eine ähnliche Gestaltung ist in der Figur 19 im Schnitt dargestellt, bei der es sich im Unterschied zur Darstellung gemäß Figur 18 nur darum handelt, dass in der Figur 19 eine wesentlich dickere Platte 55 in das Klemmstück eingeschoben ist.

In der Figur 20 ist das Klemmstück mit der Platte 55 gemäß Figur 19 dargestellt, wobei in das Klemmstück die Schraube 56 eingedreht ist, die das Mutterteil 38 vollständig durchsetzt und dieses von der Seite des unteren Schenkels 36 her gegen die Platte 55 drückt. Von der anderen Seite drückt auf die Platte 55 der Schenkel 55, auf dem der Kopf 57 der Schraube 56 aufsitzt. Nach der Anbringung der Schraube 56 ist also das Klemmstück fest mit der Platte 55 verbunden. Wenn es sich nun darum handelt, an der Platte 55 irgendein weiteres Bauteil anzuschrauben, so geschieht dies in hier nicht dargestellter Weise dadurch, dass die Schraube 56 zunächst dieses nicht dargestellte Bauteil durchsetzt und dieses dann gegen den Schenkel 35 drückt, wobei die Schraube 56 dann dieses Bauteil über das Mutterteil 38 fest an die Platte 55 heranzieht.

In der Figur 21 ist eine Besonderheit des in den vorstehend dargestellten Figuren gezeigten Klemmstücks verdeutlicht, nämlich eine Vorspannung zwischen dem oberen Schenkel 35 und dem Mutterteil 38. Wie ersichtlich, ist der Schenkel 35 in Richtung auf den Schenkel 36 abgebogen und muss beim Einschieben einer Platte (z.B. 53 oder 55 gemäß Figuren 18 und 19) sich etwas hochbiegen, um dann mit seinem Durchzug 51 und dem Durchzug 58 in das Loch in einer eingeschobenen Platte einzufedern. Hierdurch wird eine Vormontierbarkeit des Klemmstücks ermöglicht, die in vielen Fällen bei automatisierten Fabrikationen von Bedeutung ist.

In der Figur 22 ist das Klemmstück, das der Gestaltung gemäß den Figuren 13 bis 21 entspricht, eine Platte 53 eingeschoben, die mit ihrer in Einschubrichtung vorderen Seite unmittelbar vor dem Anschlagstück 59 steht. Bei völligem Einschieben der Platte 53 berührt diese das Anschlagstück 59. Der in der Figur 22 ersichtliche Spalt zwischen dem Anschlagstück 59 und der betreffenden Vorderseite der Platte 53 ist hier nur aus zeichnerischen Gründen und zur Erleichterung des Verständnisses so dargestellt.

In der Figur 23 ist eine Abwandlung des Anschlagstücks 59 gezeigt, das gegenüber der Gestaltung nach Figur 22 eine größere Länge aufweist, so dass ein Klemmstück, das mit diesem Anschlagstück versehen ist, eine entsprechend kürzer gestaltete Platte im Bereich zwischen ihrer Öffnung und der Vorderseite der Platte 23 mit Begrenzung der Einschraubtiefe aufnehmen kann.

## Patentansprüche

1. U-förmiges Klemmstück zum Anbringen an einer mit einer Öffnung (20) versehenen Platte (19) mit zwei über einen Bügel (3) verbundenen, flachen Schenkeln (1, 2) mit einem zwischen den beiden Schenkeln (1, 2) axial beweglich angeordneten Mutterteil (4) zur Aufnahme einer die Öffnung (20) und einen Schenkel (1) durchsetzenden Schraube (21), welches Mutterteil (4) über einen seitlichen Arm (14, 15, 33) an dem Klemmstück verdrehsicher gehalten ist, **dadurch gekennzeichnet, dass** das Mutterteil (4) mit seinem Ende axial federnd an dem der Platte (19) abgewandten Schenkel (2) über mehrere vom Ende des Mutterteils (4) zu dem Schenkel (2) verlaufende Spangen (5, 6) befestigt ist.

2. U-förmiges Klemmstück zum Anbringen an einer mit einer Öffnung (54) versehenen Platte (53, 55) mit zwei über einen Bügel (37) verbundenen, flachen Schenkeln (35, 36) mit einem zwischen den beiden Schenkeln (35, 36) axial beweglich angeordneten Mutterteil (38) zur Aufnahme einer die Öffnung (54) und mit einer einen Schenkel (35) durchsetzenden Schraube (56), welches Mutterteil (38) über einen seitlichen Arm (44) an dem Klemmstück verdrehsicher gehalten ist, **dadurch gekennzeichnet, dass** das Mutterteil (38) mit seinem der Platte (53, 55) zugewandten Ende über eine flexible Spange (40) an den der Platte (53, 55) abgewandten Schenkel (36) und eine weitere flexible Spange (41) an dem Bügel (37) befestigt ist und sein seitlicher Arm (44) in eine Ausnehmung (45) in den der Platte (53, 55) abgewandten Schenkel (36) verdrehsicher eingreift.

3. Klemmstück nach Anspruch 1, **dadurch gekennzeichnet, dass** der Bügel (3) mit dem Arm (14, 15, 33) eine längsbewegliche Gabelführung bildet.

4. Klemmstück nach Anspruch 3, **dadurch gekennzeichnet, dass** der Bügel (3) eine Längsrippe (30) aufweist, die von zwei Vorsprüngen (31, 32) am Ende des Arms (33) umfasst ist.

5. Klemmstück nach Anspruch 3, **dadurch gekennzeichnet, dass** der Bügel (3) mit einem Längsschlitz (12) versehen ist, in den ein Vorsprung (13) des Arms (14, 15) eingreift.

6. Klemmstück nach Anspruch 5, **dadurch gekennzeichnet, dass** der Längsschlitz (12) durch zwei parallele Längsrippen (10, 11) am Bügel (3) gebildet ist.

7. Klemmstück nach Anspruch 5, **dadurch gekennzeichnet, dass** der Vorsprung (13) mit einer Verbreiterung (26) den Bügel (3) hintergreift.

8. Klemmstück nach einem der Ansprüche 5 bis 7, **dadurch gekennzeichnet, dass** der Arm (15) über eine Schulter (27) in den Vorsprung (13) übergeht, der in Bezug auf eine Längsverschiebung des Arms (15) einen Anschlag gegen die Längsrippen (10, 11) bildet.

9. Klemmstück nach einem der Ansprüche 1 bis 8, **dadurch gekennzeichnet, dass** die Spangen (28, 29) schraubenfederartig verlaufen.

10. Klemmstück nach einem der Ansprüche 1 bis 9, **dadurch gekennzeichnet, dass** das Mutterteil (4) auf seiner der Platte (19) zugewandten Seite mit einem eine Einführschräge für die Platte (19) bildenden Lappen (16) versehen ist.

11. Klemmstück nach einem der Ansprüche 1 bis 10, **dadurch gekennzeichnet, dass** der der Platte (19) zugewandte Schenkel (1) mit einer zum Eindringen in die Öffnung (20) gestalteten Düse (17) versehen ist.

12. Klemmstück nach einem der Ansprüche 1 bis 11, **dadurch gekennzeichnet, dass** das Mutterteil (4) an seiner der Platte (19) zugewandten Seite mit einem in die Öffnung (20) hineinragenden Ring (18) versehen ist.

13. Klemmstück nach Anspruch 11 oder 12, **dadurch gekennzeichnet, dass** die Düse (17) und der Ring (18) jeweils mit einer das Einführen der Platte (19) erleichternden Abschrägung (24, 25) versehen sind.

14. Klemmstück nach Anspruch 2, **dadurch gekennzeichnet, dass** die Ausnehmung (45) als Schlitz ausgebildet ist.

15. Klemmstück nach einem der Ansprüche 1 bis 14, **dadurch gekennzeichnet, dass** der der Platte (53, 55) zugewandte Schenkel (35) und das Mutterteil (38) derart ausgerichtet sind, dass das Mutterteil (38) und der Schenkel (35) bei aufgenommener Platte (53, 55) diese einklemmen.

16. Klemmstück nach einem der Ansprüche 1 bis 15, **dadurch gekennzeichnet, dass** an dem Bügel (37) ein Anschlagstück (58) angeformt ist, an das eine in das Klemmstück eingeschobene Platte (53) zwecks Begrenzung der Einschubtiefe anschlägt.

17. Klemmstück nach einem der Ansprüche 1 bis 16 **gekennzeichnet durch** einstückige Ausbildung aus Kunststoff.

## Claims

1. U-shaped clamping piece for attachment to a panel (19) provided with an opening (20), having two flat legs (1, 2), connected by a yoke (3), with a nut part (4) axially movably disposed between the two legs (1, 2) for receiving a bolt (21), said bolt (21) penetrating the opening (20) and one leg (1), wherein said nut part (4) is non-rotatably held on the clamping piece by a lateral arm (14, 15, 33), **characterized in that** the nut part (4) is secured by its end in axially resilient manner to the leg (2) facing away from the panel (19) by means of a plurality of straps (5, 6) extending from the end of the nut part (4) to the leg (2).

2. U-shaped clamping piece for attachment to a panel (53, 55) provided with an opening (54), having two flat legs (35, 36), connected by a yoke (37), with a nut part (38) axially movably disposed between the two legs (35, 36) for receiving a bolt (56) penetrating the opening (54) and one leg (35), wherein said nut part (38) is non-rotatably held on the clamping piece by a lateral arm (44), **characterized in that** the nut part (38) is secured by its end facing the panel (53, 55) to the leg (36) facing away from the panel (53, 55) by means of a flexible strap (40) and to the yoke (37) by means of a further flexible strap (41), wherein its lateral arm (44) non-rotatably engages a recess (45) in the leg (36) facing away from the panel (53, 55).

3. Clamping piece according to claim 1, **characterized in that** the yoke (3) forms with the arm (14, 15, 33) a longitudinally movable fork guide.

4. Clamping piece according to claim 3, **characterized in that** the yoke (3) has a longitudinal rib (30), said longitudinal rib (30) being embraced by two projections (31, 32) at the end of the arm (33).

5. Clamping piece according to claim 3, **characterized in that** the yoke (3) is provided with a longitudinal slit (12), said longitudinal slit (12) being engaged by a projection (13) of the arm (14, 15).

6. Clamping piece according to claim 5, **characterized in that** the longitudinal slit (12) is formed by two parallel longitudinal ribs (10, 11) on the yoke (3).

7. Clamping piece according to claim 5, **characterized in that** the projection (13) engages behind the yoke (3) with a widened portion (26).

8. Clamping piece according to any one of claims 5 to 7, **characterized in that** the arm (15) transitions via a shoulder (27) into the projection (13), wherein, in relation to a longitudinal displacement of the arm (15), said projection (13) forms a stop against the longitudinal ribs (10, 11).

9. Clamping piece according to any one of claims 1 to 8, **characterized in that** the straps (28, 29) are like a helical spring.

10. Clamping piece according to any one of claims 1 to 9, **characterized in that** the nut part (4) is provided on its side facing the panel (19) with a tab (16) forming an insertion bevel for the panel (19).

11. Clamping piece according to any one of claims 1 to 10, **characterized in that** the leg (1) facing the panel (19) is provided with a nozzle (17) designed for penetration into the opening (20).

12. Clamping piece according to any one of claims 1 to 11, **characterized in that** the nut part (4) is provided on its side facing the panel (19) with a ring (18) projecting into the opening (20).

13. Clamping piece according to claim 11 or 12, **characterized in that** the nozzle (17) and the ring (18) are each provided with a sloping portion (24, 25) to facilitate introduction of the panel (19).

14. Clamping piece according to claim 2, **characterized in that** the recess (45) is in the form of a slit.

15. Clamping piece according to any one of claims 1 to 14, **characterized in that** the leg (35) facing the panel (53, 55) and the nut part (38) are so aligned that the nut part (38) and the leg (35) clamp the panel (53, 55) when the panel (53, 55) has been received.

16. Clamping piece according to any one of claims 1 to 15, **characterized in that** a stop piece (58) is formed on the yoke (37), wherein, having been inserted into the clamping piece, a panel (53) comes up against said stop piece (58) for the purpose of limiting the insertion depth.

17. Clamping piece according to any one of claims 1 to 16, **characterized in that** said clamping piece is of one-piece design.

## Revendications

1. Pièce de serrage en U à monter sur une plaque (19) pourvue d'une ouverture (20), comprenant deux branches plates (1, 2) reliées par l'intermédiaire d'un étrier (3), une partie femelle (4) disposée avec une possibilité de déplacement axial entre les deux branches (1, 2) pour recevoir une vis (21) traversant l'ouverture (20) et une branche (1), ladite partie femelle (4) étant bloquée en rotation contre la pièce de serrage par l'intermédiaire d'un bras latéral (14, 15, 33), **caractérisée en ce que** la partie femelle (4) est fixée par son extrémité, avec une élasticité axiale, à la branche (2) orientée à l'opposé de la plaque (19) par l'intermédiaire de plusieurs pattes (5, 6) qui s'étendent de l'extrémité de la partie femelle (4) jusqu'à la branche (2).

2. Pièce de serrage en U à monter sur une plaque (53, 55) pourvue d'une ouverture (54), comprenant deux branches plates (35, 36)) reliées par l'intermédiaire d'un étrier (37), une partie femelle (38) disposée avec une possibilité de déplacement axial entre les deux branches (35, 36)) pour recevoir une vis (56) traversant l'ouverture (54) et une branche (35), ladite partie femelle (38) étant bloquée en rotation contre la pièce de serrage par l'intermédiaire d'un bras latéral (44), **caractérisée en ce que**, par son extrémité orientée vers la plaque (53, 55), la partie femelle (38) est fixée à la branche (36) orientée à l'opposé de la plaque (53, 55) par l'intermédiaire d'une patte flexible (40) et à l'étrier (37) par l'intermédiaire d'une autre patte flexible (41), et son bras latéral (44) s'engage avec blocage en rotation dans un évidement (45) ménagé dans la branche (36) orientée à l'opposé de la plaque (53, 55).

3. Pièce de serrage selon la revendication 1, **caractérisée en ce que** l'étrier (3) forme, avec le bras (14, 15, 33), un guide à chape à déplacement longitudinal.

4. Pièce de serrage selon la revendication 3, **caractérisée en ce que** l'étrier (3) comporte une nervure longitudinale (30) qui est enserrée par deux saillies (31, 32) disposées à l'extrémité du bras (33).

5. Pièce de serrage selon la revendication 3, **caractérisée en ce que** l'étrier (3) est pourvu d'une fente longitudinale (12) dans laquelle s'engage une saillie (13) du bras (14, 15).

6. Pièce de serrage selon la revendication 5, **caractérisée en ce que** la fente longitudinale (12) est formée par deux nervures longitudinales parallèles (10, 11) disposées sur l'étrier (3).

7. Pièce de serrage selon la revendication 5, **caractérisée en ce que** la saillie (13) s'engage derrière l'étrier (3) par l'intermédiaire d'un élargissement (26).

8. Pièce de serrage selon une des revendications 5 à 7, **caractérisée en ce que** le bras (15) se prolonge par la saillie (13) avec interposition d'un épaulement (27), ladite saillie (13) formant, à l'encontre du déplacement longitudinal du bras (15), une butée contre les nervures longitudinales (10, 11).

9. Pièce de serrage selon une des revendications 1 à 8, **caractérisée en ce que** les pattes (28, 29) sont conformées en ressort hélicoïdal.

10. Pièce de serrage selon une des revendications 1 à 9, **caractérisée en ce que**, sur sa face orientée vers la plaque (19), la partie femelle (4) est munie d'une languette (16) formant une rampe d'insertion pour la plaque (19).

11. Pièce de serrage selon une des revendications 1 à 10, **caractérisée en ce que** la branche (1) orientée vers la plaque (19) est pourvue d'un bossage (17) conformé pour pénétrer dans l'ouverture (20).

12. Pièce de serrage selon une des revendications 1 à 11, **caractérisée en ce que**, sur sa face tournée vers la plaque (19), la partie femelle (4) est munie d'un anneau (18) qui pénètre dans l'ouverture (20).

13. Pièce de serrage selon la revendication 11 ou 12, **caractérisée en ce que** le bossage (17) et l'anneau (18) sont chacun pourvus d'un biseau (24, 25) qui facilite l'introduction de la plaque (19).

14. Pièce de serrage selon la revendication 2, **caractérisée en ce que** l'évidement (45) est conformé en fente.

15. Pièce de serrage selon une des revendications 1 à 14, **caractérisée en ce que** la branche (35), tournée vers la plaque (53, 55), et la partie femelle (38) sont orientées de façon que, lorsque la plaque (53, 55) est engagée, la partie femelle (38) et la branche (35) l'enserrent.

16. Pièce de serrage selon une des revendications 1 à 15, **caractérisée en ce que** sur l'étrier (37) est surmoulée une pièce de butée (58) contre laquelle une plaque (53) insérée dans la pièce de serrage vient buter afin de limiter la profondeur d'insertion.

17. Pièce de serrage selon une des revendications 1 à 16, **caractérisée par** une conception d'un seul tenant en matière plastique.
